# EUROPÄISCHE PATENTSCHRIFT

(11) **EP 3 060 355 B1**
(45) Veröffentlichungstag und Bekanntmachung des Hinweises auf die Patenterteilung: **07.03.2018**
(21) Anmeldenummer: 14793795.7
(22) Anmeldetag: 09.10.2014
(51) Int. Cl.: B05B 12/00, G05D 7/01, B01F 5/04, E03C 1/02, B01F 5/06, B05B 7/04, B01F 3/04, F16L 55/027

(54) **VORRICHTUNG ZUR BEGRENZUNG DES DURCHFLUSSES EINES FLUIDS, INSBESONDERE DES DURCHFLUSSES VON WASSER IN EINER DUSCHE**
DEVICE FOR FLOW CONTROL OF FLUID, IN PARTICULAR FOR FLOW CONTROL FOR SHOWER
DISPOSITIF DE CONTROLE D'UN FLUX DE FLUIDE, EN PARTICULIER DE CONTROLE D'UN FLUX DE FLUIDE POUR DOUCHE

(30) Priorität: 21.10.2013 DE 202013104717 U
(43) Veröffentlichungstag der Anmeldung: 31.08.2016
(73) Patentinhaber: Prenzler, Klaus, 29323 Wietze (DE)
(72) Erfinder: Prenzler, Klaus, 29323 Wietze (DE)
(74) Vertreter: Schaumburg und Partner Patentanwälte mbB
(86) Internationale Anmeldenummer: PCT/EP2014/071640
(87) Internationale Veröffentlichungsnummer: WO 2015/058965

(56) Entgegenhaltungen:
- WO-A2-2006/005099
- DE-A1-102008 050 247

## Beschreibung

Die Erfindung betrifft eine Vorrichtung zur Begrenzung des Durchflusses von beispielsweise Wasser in einer Sanitärarmatur. Eine solche Vorrichtung wird z.B. als Duschventil zwischen einer Anschlussleitung und einer Dusche eingesetzt, um den Wasserdurchfluss zu begrenzen und um Wasser einzusparen.

Aus der EP 0 693 970 B1 desselben Anmelders ist ein Wasserstrahlregler und Durchflussbegrenzer für Sanitärarmaturen bekannt. Die dort beschriebene Drosseleinrichtung umfasst eine Drosselplatte mit einer Einlassbohrung für Wasser, deren Durchmesser abhängig von der gewünschten Durchflussbegrenzung gewählt wird. Zur Feineinstellung des Durchflusses ragt eine Drosselschraube mit Ventilspitze in die Einlassbohrung. Durch Verdrehen dieser Drosselschraube kann eine präzise Einstellung des Durchflusses eingestellt werden. Dieser bekannte Wassserstrahlregler hat sich in der Praxis, insbesondere an der Waschbecken-Armatur, sehr bewährt und eine erhebliche Verbreitung gefunden. Zum Einstellen eines großen Bereiches an Durchflussbegrenzung kann die Drosselplatte mit der Einlassbohrung gegen eine andere mit einem anderen Bohrdurchmesser ausgetauscht werden. Durch die Bevorratung unterschiedlicher Drosselscheiben beim Hersteller oder Anwender kann ein breites Anwendungsspektrum in unterschiedlichen Branchen abgedeckt werden.

Aus der weiteren EP 2 331 755 B1 desselben Anmelders ist eine Reguliereinrichtung bekannt, die ein zylinderförmiges Drosselelement enthält. Dieses lenkt den einlaufenden Wasserstrahl um und führt ihn in einen Mischraum, in welchem eine Vermischung mit Luft stattfinden kann. Der Wasserstrahl wird zusätzlich über eine Regulierschraube feinreguliert. Die Luftbeimischung ist einstellbar und kann in einer Einstellung völlig abgeschaltet werden.

Die DE 10 2008 050 247 A offenbart eine Drossel für Sanitärarmaturen, wobei ein Zulaufkörper und ein Ablaufkörper um eine gemeinsame Längsachse drehbar miteinander verbunden sind.

Es ist Aufgabe der Erfindung, eine Vorrichtung zur Begrenzung des Durchflusses eines Fluids, insbesondere des Durchflusses von Wasser in einer Sanitärarmatur, anzugeben, bei der mit einfachen Handgriffen ein großer Durchfluss-Einstellbereich realisierbar ist.

Diese Aufgabe wird durch eine Vorrichtung gelöst, mit einem im Wesentlichen zylindrischen, hohlen Zulaufkörper für das Fluid und mit einem im Wesentlichen zylindrischen Ablaufkörper für das Fluid, der mit dem Zulaufkörper um eine gemeinsame Längsachse drehbar verbunden ist. Das Fluid wird über eine Querbohrung und einen sich anschließenden Hohlraum in Längsache weiterleitet, wobei der Zulaufkörper eine in Längsachse verlaufende Ausnehmung hat, die mit der Querbohrung im Ablaufkörper ein Drosselventil bildet. In einer ersten radialen Position von Querbohrung und Ausnehmung relativ zueinander ist ein maximaler Durchfluss, in einer zweiten radialen Position ein minimaler Durchfluss und in Zwischenpositionen davon ein definierter Durchfluss für das Fluid vom Eingang des Zulaufkörpers bis zum Ausgang des Ablaufkörpers einstellbar.

Bei der Vorrichtung nach der Erfindung kann durch Verdrehen zwischen Zulaufkörper und Ablaufkörper gegeneinander der Durchfluss zwischen einem minimalen Wert und einem maximalen Wert sowie Zwischenwerte auf einfache Weise eingestellt werden. Die einmal eingestellte radiale Position wird dann mit Hilfe einer Klemmvorrichtung fixiert. Wenn der Durchfluss geändert werden soll, beispielsweise bei einer Dusche, so muss ein Benutzer lediglich die radiale Position zwischen Zulaufkörper und Ablaufkörper verändern, ohne dass Teile ausgetauscht werden müssen. Wenn die Zwischenpositionen ohne Rasterung erreicht werden können, so ist die Durchflussmenge stufenlos regulierbar.

Bei der Erfindung mündet der Hohlraum im Ablaufkörper in eine Mischkammer, die mindestens eine seitliche Ansaugbohrung hat, aus der ein weiteres Fluid, vorzugsweise Außenluft, von außerhalb des Ablaufkörpers zuführbar ist. In der Mischkammer wird dem ersten Fluid ein weiteres Fluid zugeführt, so dass beispielsweise eine Vermischung und Verwirbelung von Wasser und Luft erfolgt, so dass ein relativ großer Volumenstrom bei verringertem Wasseranteil entsteht. Hierdurch erfolgt ein Einsparen von Wasser. Über die Ansaugbohrung erfolgt auch eine Entleerung von Wasser, so dass keine Verkalkung und kaum stehendes Wasser entsteht, wodurch die Verkeimung stark reduziert ist.

Innerhalb des Ablaufkörpers ist im Anschluss an die Mischkammer als Einsatz ein Düsenelement angeordnet, welches entlang der Längsachse des Ablaufkörpers verstellbar ist und mit seinem oberen Rand in die Mischkammer eintauchen kann. Beim Verstellen des Düsenelements entlang der Längsachse wird somit die Wirksamkeit der Mischkammer zum Vermischen des Fluids mit dem weiteren Fluid einstellbar. Besonders vorteilhaft ist es, wenn das Düsenelement als Venturi-Düse ausgebildet ist, wodurch in der Mischkammer ein Vakuum erzeugt wird, um über die Ansaugbohrung weiteres Fluid, vorzugsweise Außenluft, anzusaugen.

Ein Ausführungsbeispiel der Erfindung ist dadurch gekennzeichnet, dass der Ablaufkörper einen am Ende verschlossenen Zapfen mit der Querbohrung umfasst, der in die Ausnehmung ragt, die als Langloch ausgebildet ist. In der ersten radialen Position fluchtet die Querbohrung mit der Längsachse der Ausnehmung und in der zweiten Position fluchtet die Querbohrung mit der Querachse des Langlochs. Querbohrung und Langloch wirken als Drosselventil zusammen. Vorzugweise setzt sich das Langloch aus drei nebeneinander angeordneten Bohrungen zusammen, wobei die Mittelbohrung nur unwesentlich größer als der Durchmesser des Zapfens ist. Wenn die Querbohrung mit der Querachse des Langlochs fluchtet, so ist die Querbohrung im Wesentlichen abgedichtet und es gelangt kein Fluid vom Zulaufkörper über die Querbohrung in den Hohlraum des Ablaufkörpers.

Um einen minimalen Durchfluss an Fluid zu erhalten, kann die Stirnfläche des Zapfens eine Öffnung, z.B. eine Bohrung, enthalten, welche Fluid dem Hohlraum zuführt. Alternativ kann der Durchmesser des Zapfens verkleinert sein, so dass ein Freiraum zwischen Langloch und Querbohrung geschaffen ist, der Fluid in die Querbohrung fließen lässt.

Ein weiteres Ausführungsbeispiel ist dadurch gekennzeichnet, dass die Klemmvorrichtung durch eine zumindest teilweise umlaufende Nut im Ablaufkörper und mindestens eine seitliche Schraube gebildet ist, die den Zulaufkörper und den Ablaufkörper in der eingestellten radialen Position fixiert. Vorzugsweise werden zwei seitliche Madenschrauben verwendet, die in einem Abstand von 180° zueinander bündig in den Zulaufkörper eingeschraubt werden können und am Grunde der Nut die feste Verbindung zwischen Zulaufkörper und Ablaufkörper herstellen. Durch Lösen der seitlichen Schrauben kann der Ablaufkörper vom Zulaufkörper gelöst und gereinigt werden. Vorzugsweise läuft die Nut voll um den Umfang, so dass der Ablaufkörper eine beliebige radiale Position einnehmen kann. Dies ist vorteilhaft, um die seitliche Ansaugbohrung beliebig positionieren zu können. Aus dieser Ansaugbohrung entleert sich die Vorrichtung von in ihr befindlichem Fluid und die Richtung, in die diese Entleerung stattfindet, kann auf diese Weise frei gewählt werden.

Gemäß einem weiteren vorteilhaften Ausführungsbeispiel ist in der Mischkammer eine Spiralfeder angeordnet, die gegen den oberen Rand des Düsenelements drückt und die eingestellte Position des Düsenelements fixiert. Auf diese einfache Weise wird die Lage der Düse und damit das Mischverhältnis der Mischkammer festgelegt.

Ein Ausführungsbeispiel ist nachfolgend in den Zeichnungen dargestellt. Darin zeigt:
- Figur 1: einen Querschnitt durch die zusammengesetzte Vorrichtung umfassend einen Zulaufkörper und einen Ablaufkörper,
- Figur 2: einen Querschnitt durch das Düsenelement, und
- Figur 3: eine Draufsicht auf die als Langloch ausgebildete Ausnehmung, und
- Figur 4: eine Variante des Ausführungsbeispiels nach Figur 1.

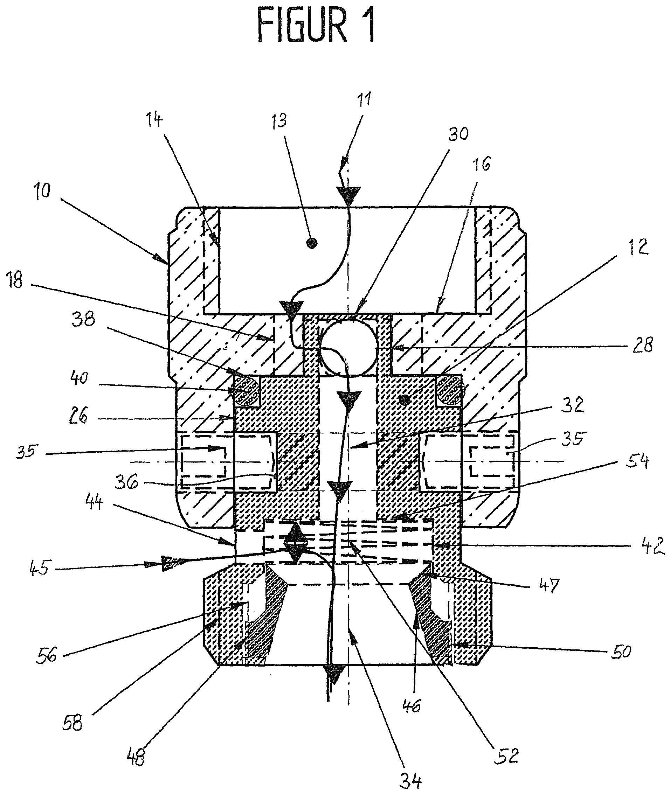

Figur 1 zeigt in einer Querschnittsdarstellung eine Vorrichtung zur Begrenzung des Durchflusses von Wasser in einer Sanitärarmatur. Eine solche Vorrichtung wir z.B. als Duschventil zwischen einer Anschlussleitung und einer Dusche eingesetzt, um den Wasserdurchfluss zu begrenzen.

Die Vorrichtung umfasst einen zylindrischen, hohlen Zulaufkörper 10 und einen in ihn eingesetzten im Wesentlichen zylindrischen Ablaufkörper 12. Beide Körper 10, 12 sind vorzugsweise als rotationssymmetrisches Drehteil aus Metall gefertigt.

Der Zulaufkörper 10 für das Fluid 11, hier Wasser, umfasst einen Eintrittsraum 13, der seitlich durch ein Innengewinde 14 für den Anschluss einer Wasserleitung ist und in Figur 1 nach unten hin durch eine feststehende Drosselwand 16 begrenzt ist, die vorzugsweise einstückig mit dem Zulaufkörper 10 ausgebildet ist.

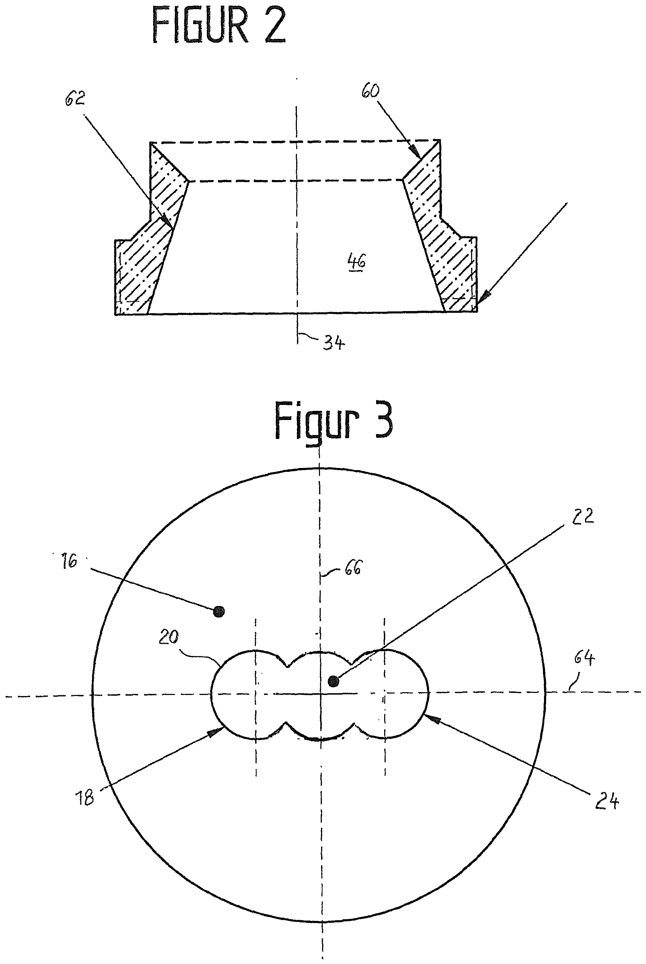

Diese Drosselwand 16 ist in Figur 3 in einer Draufsicht zu sehen. Sie enthält ein Langloch 18, das wie in Figur 3 zu sehen ist, durch drei Bohrungen 20, 22, 24 gebildet ist. Näheres hierzu wird weiter unten ausgeführt.

Der Zulaufkörper 10 erweitert sich zu einem Aufnahmeraum 26, in welchem der rotationssymmetrische Ablaufkörper 12 aufgenommen ist. Der Ablaufkörper 12 hat in seinem in Figur 1 gezeigten oberen Bereich einen Zapfen 28, der in die Drosselwand 16 in das Langloch 18 ragt. Der Zapfen 28 ist nach oben verschlossen und hat eine Querbohrung 30, die mit einem zylindrischen Hohlraum 32 kommuniziert, welcher z.B. als Sacklochbohrung realisiert ist. Das Langloch 18 und die Querbohrung 30 im Zapfen 28 haben zusammen die Funktion eines Drosselventils. In der gezeigten zweiten radialen Position, in der die Querbohrung 30 senkrecht zur Blattebene in Figur 1 steht, ist das Drosselventil geschlossen und nur minimaler Durchfluss an Fluid 11 kann vom Eintrittsraum 13 in den Hohlraum 32 fließen. Der Ablaufkörper 12 ist in dem Zulaufkörper 10 um eine gemeinsame Längsachse 34 drehbar angeordnet. Wenn der Ablaufkörper 12 um 90° gegenüber Figur 1 verdreht wird, so fluchtet die Querbohrung 30 mit der längeren Achse des Langlochs 18 und es fließt Fluid 11 vom Eintrittsraum 13 mit maximalem Durchfluss über das Langloch 18 in die Querbohrung 30 und in den Hohlraum 32, wie dies durch Pfeile für das Fluid 11 angedeutet ist. In Zwischenpositionen kann ein definierter Durchfluss für das Fluid 11 vom Eingang des Zulaufkörpers 10 bis zum Ausgang des Ablaufkörpers 12 eingestellt werden.

Um die eingestellte radiale Position von Zulaufkörper 10 und Ablaufkörper 12 relativ zueinander zu fixieren, ist eine Klemmvorrichtung vorgesehen. Diese ist gebildet durch Madenschrauben 35, die in Gewinden im Zulaufkörper 10 einschraubbar sind. Die Madenschrauben 35 greifen in eine 360° umlaufende Nut 36 im Ablaufkörper 12 ein und verklemmen so Zulaufkörper 10 und Ablaufkörper 12 in der eingestellten radialen Position. Auf diese Weise kann der Ablaufkörper 12 um 360° im Zulaufkörper 10 verdreht und fixiert werden.

Alternativ kann der Winkel für die Nut verkleinert sein, wodurch der einstellbare Verdrehwinkel ebenfalls verkleinert ist.

Der Ablaufkörper 12 enthält eine umlaufende Aussparung 38 zur Aufnahme eines O-Rings 40, wodurch Zulaufkörper 10 und Ablaufkörper 12 gegeneinander fluiddicht durch horizontalen und vertikalen Flächenkontakt abgedichtet sind. Dadurch ist eine lange Lebensdauer der Abdichtung gewährleistet.

Der zylindrische Hohlraum 32 mündet in eine im Durchmesser vergrößerte Mischkammer 42, die seitlich eine Ansaugbohrung 44 hat, aus der ein weiteres Fluid 45, in diesem Fall Außenluft, von außerhalb des Ablaufkörpers 12 zugeführt wird. Über diese Ansaugbohrung 44 kann die Vorrichtung auch von noch in ihr befindlichem Wasser entleert werden.

Im Anschluss an die Mischkammer 42 ist innerhalb des Ablaufkörpers 12 als variabler Einsatz ein rotationssymmetrisches Düsenelement 46 angeordnet, welches entlang der Achse 34 verstellbar ist und mit seinem oberen Rand 47 in Figur 1 in die Tiefe der Mischkammer 42 eintauchen kann. Zum Verstellen umfasst das Düsenelement 46 ein Außengewinde 48, welches im Eingriff mit einem Innengewinde 50 im Ausgangsbereich des Ablaufkörpers 12 steht. Durch Verdrehen des Düsenelements 46 wird die Eindringtiefe des oberen Randes 47 in die Mischkammer 42 und dadurch das Mischungsverhältnis von Wasser mit Außenluft einstellbar. In der Mischkammer 42 ist eine Spiralfeder 52 angeordnet, die sich einerseits an einem Anschlag 54 im Ablaufkörper 12 und andererseits am oberen Rand 47 des Düsenelements 46 abstützt. Durch den so ausgeübten Druck wird die eingestellte Lage des Düsenelements 46 in Bezug auf die Mischkammer 42 fixiert.

Zwischen dem Abflusskörper 12 und dem Düsenelement 46 befindet sich ein Freiraum 56. Das Düsenelement 46 kann entsprechend diesem Freiraum 56 in die Tiefe der Mischkammer 42 eingeschraubt werden. Die maximale Einschraubtiefe ist durch den Anschlag 54 begrenzt. Bei maximaler Einschraubtiefe erfolgt keine Luftbeimischung mehr. Diese Einstellung kann aus Hygienegründen bei Anwendungen z.B. im Krankenhaus erwünscht sein, um die Gefahr einer Keimbildung durch Aerosole zu vermindern. Vorzugsweise ist das Düsenelement 46 als Venturi-Düse ausgebildet, um in der Mischkammer Vakuum zum Ansaugen von Außenluft zu erzeugen.

Im unteren Bereich in Figur 1 hat der Ablaufkörper 12 ein Außengewinde 58 zum Anschluss einer Armatur, beispielsweise einer Leitung oder eines Duschkörpers.

Figur 2 zeigt in einem Querschnitt das Düsenelement 46, welches als Venturi-Düse ausgebildet ist. Im Staubereich befindet sich eine Abschrägung 60, die dann in den Venturi-Konus 62 übergeht.

Figur 3 zeigt eine Draufsicht auf die Drosselwand 16 mit dem Langloch 18. Dieses ist gebildet durch eine mittlere Bohrung 22 und zwei seitliche Bohrungen 20 und 24 entlang einer Längsachse 64. Die mittlere Bohrung 22 ist geringfügig größer als der Durchmesser des Zapfens 28. Wenn die Querbohrung 30 mit der Querachse 66 des Langlochs 18 fluchtet, so ist das aus Querbohrung 30 und Bohrloch 22 gebildete Ventil geschlossen. Wenn der Ablaufkörper 12 so verdreht wird, dass die Querbohrung 30 mit der Längsachse 64 des Langlochs 18 fluchtet, so ist das aus Langloch 18 und Querbohrung 30 gebildete Drosselventil voll geöffnet und es erfolgt maximaler Durchfluss an Fluid 11. In Dreh-Zwischenpositionen ist ein definierter Durchfluss für das Fluid 11 vom Eingang des Zulaufkörpers 10 bis zum Ausgang des Ablaufkörpers 12 einstellbar.

Es sind verschiedene Variationen des gezeigten Ausführungsbeispiels möglich. Z.B. muss die Querbohrung 30 nicht zylindrisch sein, sondern kann eine andere Querschnittsform, z.B. rechteckig, haben. Um den minimalen Durchfluss zu gewährleisten kann die Stirnwand des Zapfens 28 eine Öffnung, z.B. Bohrung, haben. Alternativ oder zusätzlich kann das Spiel zwischen Zapfen 28 und Ausnehmung 18 vergrößert sein.

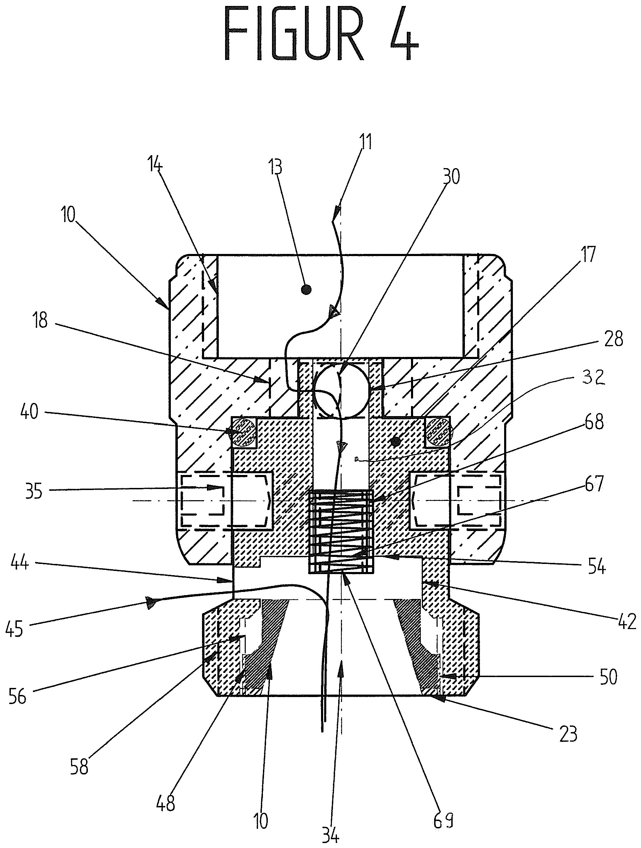

Figur 4 zeigt eine wichtige Variante des Ausführungsbeispiels nach Figur 1. Gleiche Teile sind gleich bezeichnet. Das Bohrloch 32 enthlt gemäß Figur 4 ein Gewinde 68, in das ein Gewindestift 67 eingeschraubt ist. Dieser Gewindestift 67 enthält eine Längsbohrung 69 mit einem vorbestimmten Durchmesser. Der Gewindestift 67 mit Längsbohrung 69 dient als austauschbare Düse. Gewindestifte 67 mit unterschiedlichen Durchmessern für die Längsbohrung 69 ermöglichen eine variable Einstellung der maximalen Durchflussmenge. Außerdem kann der Hohlraum des Bohrlochs 32 auf einem maximalen Querschnitt gehalten werden, um z.B. auch für Regenduschen einen relativ großen Wasserdurchfluss zu regulieren, z.B. 12 bis 16 l/min. Mit der in Figur 4 gezeigten Variante ist der Einsatzbereich der Vorrichtung erheblich erweitert.

Die beschriebene Vorrichtung zur Begrenzung des Durchflusses eines Fluids ist im privaten und kommerziellen Bereich einsetzbar. Die Vorrichtung hat einen einfachen Aufbau und besteht im Wesentlichen aus zwei Hauptkörpern mit O-Ring und zwei Madenschrauben, einem Düsenelement und einer Feder zur Sicherung des Düsenelements. Die Durchflussmenge an Fluid, vorzugsweise Wasser, ist stufenlos regulierbar. Auch die Ansaugung eines weiteren Fluids, im Wesentlichen Außenluft, ist über das Düsenelement einstellbar. Ebenso ist das Mischungsverhältnis von Außenluft und Wasser einstellbar. Die Entleerung eines Zuführschlauches und eines Armaturenelements, beispielsweise eines Brausekopfes, ist auf einfach Weise über die Ansaugbohrung für die Außenluft möglich.

### Bezugszeichenliste

- 10: Zulaufkörper
- 11: Fluid
- 12: Ablaufkörper
- 13: Eintrittsraum
- 14: Innengewinde
- 16: Drosselwand
- 18: Langloch
- 20, 22, 24: Bohrungen
- 26: Aufnahmeraum
- 28: Zapfen
- 30: Querbohrung
- 32: Hohlraum
- 34: Längsachse
- 35: Madenschrauben
- 36: Nut
- 38: Aussparung
- 40: O-Ring
- 42: Mischkammer
- 44: Ansaugbohrung
- 45: weiteres Fluid
- 46: Düsenelement
- 47: oberer Rand des Düsenelements
- 48: Außengewinde
- 50: Innengewinde
- 52: Spiralfeder
- 54: Anschlag
- 56: Freiraum
- 58: Außengewinde
- 60: Abschrägung
- 62: Venturi-Konus
- 64: Längsachse
- 66: Querachse
- 67: Gewindestift
- 68: Gewinde
- 68: Längsbohrung

## Patentansprüche

1. Vorrichtung zur Begrenzung des Durchflusses eines Fluids, insbesondere des Durchflusses von Wasser in einer Sanitärarmatur,
mit einem im Wesentlichen zylindrischen, hohlen Zulaufkörper (10) für das Fluid (11),
und mit einem im Wesentlichen zylindrischen Ablaufkörper (12) für das Fluid, der mit dem Zulaufkörper (10) um eine gemeinsame Längsachse (34) drehbar verbunden ist, **dadurch gekennzeichnet, dass** der Ablaufkörper (12) das Fluid (11) über eine Querbohrung (30) und einen sich anschließenden Hohlraum (32) in Längsachse (34) weiterleitet,
wobei der Zulaufkörper (10) eine in Längsachse (34) verlaufende Ausnehmung (18) hat, die mit der Querbohrung (30) im Ablaufkörper (12) ein Drosselventil bildet, wobei in einer ersten radialen Position von Querbohrung (30) und Ausnehmung (18) relativ zueinander ein maximaler Durchfluss, in einer zweiten radialen Position ein minimaler Durchfluss und in Zwischenpositionen ein definierter Durchfluss für das Fluid (11) vom Eingang des Zulaufkörpers (10) bis zum Ausgang des Ablaufkörpers (12) einstellbar ist,
wobei der Hohlraum (32) im Ablaufkörper (12) in eine Mischkammer (42) mündet, die mindestens eine seitliche Ansaugbohrung (44) hat, aus der ein weiteres Fluid (45) von außerhalb des Ablaufkörpers (12) zuführbar ist,
und wobei im Anschluss an die Mischkammer (42) innerhalb des Ablaufkörpers (12) ein Düsenelement (46) angeordnet ist, welches entlang der Längsachse (34) des Ablaufkörpers (12) verstellbar ist und mit seinem oberen Rand (47) in die Tiefe der Mischkammer (42) eintauchen kann,
und mit einer Klemmvorrichtung (35, 36), die die eingestellte radiale Position von Zulaufkörper (10) und Ablaufkörper (12) relativ zueinander fixiert.

2. Vorrichtung nach Anspruch 1, **dadurch gekennzeichnet, dass** der Ablaufkörper (12) einen Zapfen (28) mit der Querbohrung (30) umfasst, der in die Ausnehmung (18) ragt, die als Langloch ausgebildet ist, wobei in der ersten radialen Position die Querbohrung (30) mit der Längsachse (64) des Langlochs (18) fluchtet und in der zweiten Position mit der Querachse (66) des Langlochs (18) fluchtet.

3. Vorrichtung nach Anspruch 1 oder 2, **dadurch gekennzeichnet, dass** die Klemmvorrichtung durch eine am Umfang des Ablaufkörpers (12) verlaufende Nut und mindestens eine seitliche Schraube (35) gebildet ist, die den Zulaufkörper (10) und den Ablaufkörper (12) in der eingestellten radialen Position fixiert.

4. Vorrichtung nach Anspruch 3, **dadurch gekennzeichnet, dass** die Nut (36) um den gesamten Umfang des Ablaufkörpers (12) verläuft.

5. Vorrichtung nach einem der vorhergehenden Ansprüche , **dadurch gekennzeichnet, dass** das Düsenelement (46) als Venturi-Düse ausgebildet ist.

6. Vorrichtung nach einem der vorhergehenden Ansprüche, **dadurch gekennzeichnet, dass** das Düsenelement (46) ein Außengewinde (48) umfasst, welches im Eingriff mit einem Innengewinde (50) des Ablaufkörpers (12) steht, und dass durch Verdrehen des Düsenelementes (46) die Eindringtiefe des oberen Randes (47) in die Mischkammer (42) und dadurch das Mischungsverhältnis von Fluid (11) mit dem weiteren Fluid (45), vorzugsweise Außenluft, einstellbar ist.

7. Vorrichtung nach einem der vorhergehenden Ansprüche, **dadurch gekennzeichnet, dass** in der Mischkammer (42) eine Spiralfeder (52) angeordnet ist, die gegen den oberen Rand (47) des Düsenelements (46) drückt und die eingestellte Position des Düsenelements (46) fixiert.

8. Vorrichtung nach einem der vorhergehenden Ansprüche, **dadurch gekennzeichnet, dass** der Zulaufkörper (10) gegenüber dem Ablaufkörper (12) mittels eines O-Ringes (40) abgedichtet ist.

9. Vorrichtung nach einem der vorhergehenden Ansprüche 2 bis 8 **dadurch gekennzeichnet, dass** die Stirnfläche des Zapfens (28) eine mit der Querbohrung (30) verbundene Öffnung enthält, die in der zweiten Position einen minimalen Durchfluss an Fluid (11) gewährleistet.

10. Vorrichtung nach einem der vorhergehenden Ansprüche 2 bis 9, **dadurch gekennzeichnet, dass** zwischen Zapfen (28) und Ausnehmung (18) ein Freiraum vorhanden ist, der in der zweiten Position einen minimalen Durchfluss an Fluid (11) gewährleistet.

11. Vorrichtung nach einem der vorhergehenden Ansprüche 1 bis 10, **dadurch gekennzeichnet, dass** der Hohlraum (32) ein Gewinde (68) umfasst, das einen Gewindestift (67) mit einer Längsbohrung (69) enthält, wobei der Gewindestift (67) als austauschbare Düse zur Begrenzung des Durchflusses dient.

## Claims

1. A device for limiting the flow of a fluid, in particular the flow of water in a sanitary fitting,
with a substantially cylindrical hollow inlet body (10) for the fluid (11),
and with a substantially cylindrical outlet body (12) for the fluid, which outlet body is rotatably connected to the inlet body (10) about a common longitudinal axis (34), **characterized in that** the outlet body (12) conveys the fluid (11) further via a transverse bore (30) and an adjoining cavity (32) in longitudinal axis (34),
wherein the inlet body (10) has a recess (18) extending in the longitudinal axis (34) and forming a throttle valve together with the transverse bore (30) in the outlet body (12), wherein in a first radial position of transverse bore (30) and recess (18) relative to each other a maximum flow is settable, in a second radial position a minimum flow is settable and in an intermediate position a defined flow for the fluid (11) from the entry of the inlet body (10) to the exit of the outlet body (12) is settable,
wherein the cavity (32) in the outlet body (12) leads into a mixing chamber (42) having at least one lateral suction bore (44) from which a further fluid (45) can be fed in from outside the outlet body (12),
and wherein, following the mixing chamber (42), a nozzle element (46) is arranged within the outlet body (12), which nozzle element is adjustable along the longitudinal axis (34) of the outlet body (12) and can dip into the depth of the mixing chamber (42) with its upper rim (47),
and with a clamping device (35, 36) which fixes the set radial position of inlet body (10) and outlet body (12) relative to each other.

2. The device according to claim 1, **characterized in that** the outlet body (12) comprises a plug (28) with the transverse bore (30), which projects into the recess (18) that is formed as an elongated hole, wherein in the first radial position the transverse bore (30) is aligned with the longitudinal axis (64) of the elongated hole (18) and in the second position is aligned with the transverse axis (66) of the elongated hole (18).

3. The device according to claim 1 or 2, **characterized in that** the clamping device is formed by a groove extending along the circumference of the outlet body (12) and at least one lateral screw (35) that fixes the inlet body (10) and the outlet body (12) in the set radial position.

4. The device according to claim 3, **characterized in that** the groove (36) extends around the entire circumference of the outlet body (12).

5. The device according to one of the preceding claims, **characterized in that** the nozzle element (46) is formed as a Venturi nozzle.

6. The device according to one of the preceding claims, **characterized in that** the nozzle element (46) comprises an external thread (48) which is engaged with an internal thread (50) of the outlet body (12), and that by rotation of the nozzle element (46) the depth of penetration of the upper rim (47) into the mixing chamber (42) and thus the mixing ratio of fluid (11) with the further fluid (45), preferably outdoor air, is settable.

7. The device according to one of the preceding claims, **characterized in that** in the mixing chamber (42) a coil spring (52) is arranged which presses against the upper rim (47) of the nozzle element (46) and fixes the set position of the nozzle element (46).

8. The device according to one of the preceding claims, **characterized in that** the inlet body (10) is sealed with respect to the outlet body (12) by means of an 0-ring.

9. The device according to one of the preceding claims 2 to 8, **characterized in that** the end face of the plug (28) includes an opening in communication with the transverse bore (30), which opening guarantees a minimum flow of fluid (11) in the second position.

10. The device according to one of the preceding claims 2 to 9, **characterized in that** between the plug (28) and the recess (18) a free space is provided which in the second position guarantees a minimum flow of fluid (11).

11. The device according to one of the preceding claims 1 to 10, **characterized in that** the cavity (32) comprises a thread (68) including a threaded pin (67) with a longitudinal bore (69), the threaded pin (67) serving to limit the flow as an exchangeable nozzle.

## Revendications

1. Dispositif de limitation du débit d'un fluide, en particulier du débit d'eau dans une robinetterie sanitaire,
comprenant un corps d'arrivée (10) creux, sensiblement cylindrique, pour le fluide (11),
et comprenant un corps d'évacuation (12) sensiblement cylindrique pour le fluide, qui est relié au corps d'arrivée (10) de manière à pouvoir tourner autour d'un axe longitudinal (34) commun, **caractérisé en ce que** le corps d'évacuation (12) achemine le fluide (11) dans l'axe longitudinal (34) en le faisant passer par un trou transversal (30) et par une cavité (32) située dans son prolongement,
le corps d'arrivée (10) présentant un évidement (18) qui s'étend dans l'axe longitudinal (34) et qui forme avec le trou transversal (30) dans le corps d'évacuation (12) une soupape d'étranglement, dans lequel dans une première position radiale du trou transversal (30) et de l'évidement (18) l'un par rapport à l'autre, un débit maximal pour le fluide (11) de l'entrée du corps d'arrivée (10) à la sortie du corps d'évacuation (12) peut être réglé, dans une deuxième position radiale, un débit minimal peut être réglé, et dans les positions intermédiaires, un débit défini peut être réglé,
la cavité (32) débouchant dans le corps d'arrivée (12) dans une chambre de mélange (42), qui présente au moins un trou d'aspiration (44) latéral dont un autre fluide (45) peut être amené depuis l'extérieur du corps d'arrivée (12),
et un élément buse (46), lequel peut être déplacé le long de l'axe longitudinal (34) du corps d'arrivée (12) et peut s'enfoncer avec son bord supérieur (47) dans la profondeur de la chambre de mélange (42), étant agencé dans le prolongement de la chambre de mélange (42) à l'intérieur du corps d'évacuation (12),
et comprenant un dispositif de serrage (35, 36), qui fixe la position radiale réglée du corps d'arrivée (10) et du corps d'évacuation (12) l'un par rapport à l'autre.

2. Dispositif selon la revendication 1, **caractérisé en ce que** le corps d'évacuation (12) comporte un tourillon (28) pourvu du trou transversal (30), lequel tourillon fait saillie dans l'évidement (18) qui est réalisé sous la forme d'un trou oblong, le trou transversal (30), dans la première position radiale, étant en affleurement avec l'axe longitudinal (64) du trou oblong (18) et, dans la deuxième position, avec l'axe transversal (66) du trou oblong (18).

3. Dispositif selon la revendication 1 ou 2, **caractérisé en ce que** le dispositif de serrage est formé par une rainure s'étendant à la périphérie du corps d'évacuation (12) et par au moins une vis latérale (35), qui fixe le corps d'arrivée (10) et le corps d'évacuation (12) dans la position radiale réglée.

4. Dispositif selon la revendication 3, **caractérisé en ce que** la rainure (36) s'étend le long de toute la périphérie du corps d'évacuation (12).

5. Dispositif selon l'une quelconque des revendications précédentes, **caractérisé en ce que** l'élément buse (46) est réalisé sous la forme d'une buse venturi.

6. Dispositif selon l'une quelconque des revendications précédentes, **caractérisé en ce que** l'élément buse (46) comporte un filet extérieur (48), lequel est en contact avec un filet intérieur (50) du corps d'évacuation (12), et **en ce que**, à la suite d'une rotation de l'élément buse (46), la profondeur de pénétration du bord supérieur (47) dans la chambre de mélange (42) et donc le rapport de mélange du fluide (11) à l'autre fluide (45), de préférence de l'air extérieur, est réglable.

7. Dispositif selon l'une quelconque des revendications précédentes, **caractérisé en ce qu'**un ressort spiral (52), qui exerce une pression contre le bord supérieur (47) de l'élément buse (46) et fixe la position réglée de l'élément buse (46), est agencé dans la chambre de mélange (42).

8. Dispositif selon l'une quelconque des revendications précédentes, **caractérisé en ce que** le corps d'arrivée (10) est étanchéifié par rapport au corps d'évacuation (12) au moyen d'un joint torique (40).

9. Dispositif selon l'une quelconque des revendications précédentes 2 à 8, **caractérisé en ce que** la surface frontale du tourillon (28) contient une ouverture reliée au trou transversal (30), laquelle garantit un débit minimal de fluide (11) dans la deuxième position.

10. Dispositif selon l'une quelconque des revendications précédentes 2 à 9, **caractérisé en ce qu'**un espace libre est présent entre le tourillon (28) et l'évidement (18) et garantit un débit minimal de fluide (11) dans la deuxième position.

11. Dispositif selon l'une quelconque des revendications 1 à 10, **caractérisé en ce que** la cavité (32) comporte un filet (68) qui contient une tige filetée (67) pourvue d'un trou longitudinal (69), la tige filetée (67) servant de buse interchangeable destinée à limiter le débit.
